# EUROPEAN PATENT APPLICATION

(11) **EP 1 978 078 A1**
(43) Date of publication of application: **08.10.2008**
(21) Application number: 07380090.6
(22) Date of filing: 04.04.2007
(51) Int. Cl.: C11B 1/02, C11B 1/06

(54) **Preserved olive paste**

(71) Applicant: Mediterranea Identitat S.L., 43850 Cambrils, Tarragona (ES)
(72) Inventor: Márque Gómez, Amador, 43850 Cambrils Tarragona (ES); Costa Escoda, Telm, 43850 Cambrils Tarragona (ES)
(74) Representative: Pons Arino, Angel

(57) **Abstract**

The present invention refers to a method for the preservation of olive oil which consists of freezing and/or vacuum-packing the paste obtained from ground olives. Additionally, the invention also comprises the olive paste obtained through the preservation method and the procedure for obtaining the olive oil and the olive oil obtained through this method.

## Description

The present invention refers to a method for the preservation of olive oil that consists of freezing and/or vacuum-packing the paste obtained from olive grinding. Furthermore, the invention also comprises the olive paste obtained through the preservation method and the procedure to obtain olive oil and the olive oil obtained through this method.

### Background of the invention

Olive oil is extracted from olives (European Olea), which is the fruit of the olive tree. The composition of this fruit at the time of harvesting varies greatly, depending on the variety of olives, the soil, the weather and the crop. Olive oil is a live product and therefore special care is required when it is stored. If the oil is stored in deficient conditions, it goes through certain changes that alter it (rancidity, etc). In order to prevent these changes from taking place, the olive oil is currently stored in mills under the following conditions:
- Built of waterproof material in order to allow them to be washed before they are filled with new oil.
- They are made of inert material which cannot react against the oil.
- They do not absorb odours.
- They do not contain materials that speed up the rancidity process.
- They do not absorb light and humidity.
- They are kept at constant temperature, if possible, 15° C, due to the fact that higher temperatures encourage the rancidness and low temperatures cause the oil to get blurry.

However, this kind of storage is expensive and can lead to the accumulation of a layer of non-soluble material during storage that can ferment and cause unpleasant odours in the olive oil. In order to avoid this, the oil must be strained, a treatment that must sometimes be repeated several times before bottling. During these procedures, the olive oil must be exposed to the air as briefly as possible in order to avoid oxidation or rancidity.

Furthermore, in order to prevent the olive oil from losing its excellent properties, it must not be stored for long periods of time. If this is inevitable, it must be stored in a place where there is no excessive heat or humidity, far from the light and from intense odours, due to the fact that the oil has the peculiar feature of absorbing intense odours fast, and these odours may be harmful to the features of this liquid gold.

Therefore, there is a need in the state of the art to improve the methods of preserving olive oil.

### Description of the Invention

This invention refers to a method for the preservation of olive oil that consists of freezing and/or vacuum-packing the paste obtained from olive grinding. The said preserved and frozen olive paste results in an olive oil with surprisingly superior analytical and sensory characteristics in comparison with other preservation methods.

Olive oil is a product with extremely complex physical-chemical and organoleptic features. The preservation of these features is essential for the product to keep those properties (taste, odour, etc), which make it a vital component of all balanced diets.

Therefore, the proper preservation of olive oil is essential for maintaining the oil's nutritious and organoleptic properties. The olive oil preservation method corresponding to this invention makes it possible to obtain high quality olive oil easily and quickly from the preserved and frozen olive paste. The paste results in an olive oil with physical-chemical and organoleptic features higher than those from the oil obtained through other preservation methods, and therefore it allows obtaining excellent quality virgin olive oil for longer periods. Additionally, the preserved frozen olive paste makes it possible to obtain extra virgin olive oil instantaneously as needed, during long periods of time. Thus, any person in any part of the world would have access to an olive oil obtained at the same time of consumption, thereby preserving its physical-chemical and organoleptic features.

In order to verify the olive oil quality obtained from the preserved frozen olive paste of this invention, several operational controls have been performed on two different varieties of olives (Arbequina and Picual.) In order to do that, studies have conducted in comparison with other forms of oil preservation in different periods of time. Other forms of preservation used were: refrigerated or frozen preserved olives, olive oil preserved at ambient temperature and oil obtained from the preserved frozen olive paste of this invention. Those experiments are shown in examples 2 and 3 herein.

Through these experiments, it was proven (see Table II) that the sourness of the oils obtained has been kept stable during the first and third month, with a value of approximately 0.20, except for the oil obtained from preserved frozen olives, which had a high value of 0.67 on the first month and 1.21 on the third month. Therefore, it can be determined that the sourness of the oil obtained from preserved frozen olives loses the property of extra virgin oil after the third month of preservation.

It is observed that the peroxide index (PI) of the different preserved oils (see Table II) has lower values than usual, taking into account that the usual range of oils obtained from the Arbequina is between 7 and 11 mEq/Kg. However the PI of the olive oil preserved at ambient temperature shows a clear tendency to increase as time goes by. It is only necessary to observe the IP values obtained on the third month, where it is also observed that there is a significant difference between the preserved frozen paste olive oil with an PI of 3.9 and the oil preserved at ambient temperature with an PI of 6.4.

The results shown on Tables III and IV demonstrate how the refrigerated and frozen preserved olives do not render olive oils with proper sensory characteristics, as some defects have appeared in them. It can also be seen that there is a worse compensation of oil preserved at ambient temperature in the third month in comparison with the oil obtained from the preserved frozen olive paste of this invention.

As for Tables V and VI, a clearly positive tendency can be observed regarding the oil obtained from the preserved frozen olive paste Picual, which equals that corresponding to Arbequina.

Therefore, a first feature of this invention refers to a method of olive oil preservation (hereinafter called preservation method of this invention), which consists of freezing and/or vacuum-packing the paste obtained from ground olives, preferably as soon as the said paste has been obtained or within a period of time that allows the obtained olive oil to maintain the proper physical-chemical and organoleptic features that make it suitable for human or animal consumption.

The preservation method of this invention may be applied to the obtained paste from the grinding of any kind of olives, preferably but not limited to the following varieties: Picual, Hojiblanca, Lechin, Picudo, Arbequina, Cornicabra, Verdial or Empeltre and more preferably to any of the varieties shown on Table VII and even more preferably to any of the 262 varieties, which are grouped in four categories: main, secondary, disperse and local, all of which are grown in Spain.

**Table VII**

| **Name** | **Description/ Origin** |
|---|---|
| Picual o "marteña" | Ellipsoidal shape, but with a peak in the apex (pole opposite to the peduncle) that gives the name to this variety. It is the most common variety grown in Spain, especially in Andalucia. |
| Hojiblanca | Fruit, almost spherical. Andalucia |
| Lechin | Medium or small fruit with round apex Western Andalucia |
| Arbequina | Oval, short and small fruit. Cataluña and Ebro Valley |
| Picudo | Characterized nipple in the apex. It's also called "carrasqueña". It may be used as dressing (double aptitude.) |
| Goat's horn or "cornezuelo: | More prolonged ellipsoid shape than the picual, somehow deformed (goat's horn) Castilla - La Mancha |
| Verdial | Shape similar to that of a small lemon. Extremadura and Andalucia |
| Empeltre | Prolonged, somewhat asymmetric fruit, blackish when matured. Ebro Valley |
| Blanqueta | Small fruit with a nipple in the apex. Valencia and Alicante. |
| Farga | Small or medium prolonged fruit, slightly convex on one side and flat on the other side. North of Valencia Community, Tarragona and Teruel. |
| Chamomile "cacereña" | Green fruit that turns purple and that, due to its shape, it reminds of a small apple. Caceres and Salamanca. |
| Morisca | Thick fruit, somewhat prolonged. Badajoz. |
| Aloreña | Medium fruit with round apex. Mixed aptitude. Malaga. |
| Morrut | Tarragona y Castellón |
| Seville | Tarragona y Castellón |
| Castilian | Guadalajara y Cuenca |
| Villalonga | Valencia |
| Changlot | Valencia |
| Alfafara | Valencia |
| Chamomile | The fruit essentially used for table olives. It comes from "Dos Hermanas" (Seville) and is mainly grown there. |
| Gordal | Another typical table olive grown mainly in Seville. |

In a preferred embodiment of the invention, the preservation method is carried out through the washing of the olives before treatment and the elimination of vegetable parts such as leaves and vegetable remains. Then, the paste is prepared by grinding the olives in order to break the intermediate layer vacuoles (pulp) of the olive which have oil drops inside, and thus allow its extraction. This treatment is performed using different types of mills.

The paste thus obtained is preserved through freezing and/ or vacuum packing (for example, by freezing in low permeability bags or by vacuum-packing in order to preserve its properties.)

In another preferred embodiment, the preserved frozen olive paste of this invention is frozen at -40 °C and 0 °C, more preferably between -25 °C and -10 °C.

In an even more preferred embodiment of this invention, the preservation method hereof is not restricted solely to the olive oil preservation but can also be applied to the preservation of any fruit through grinding and subsequent freezing.

A second feature of this invention refers to the preserved frozen and/or vacuum-packed olive paste obtained by the preservation method hereof where that paste might be given all kinds of shapes and sizes, which makes it suitable for industrial or home marketing.

The preserved frozen and/or vacuum-packed olive paste might comprise any kind of substance that improves its physical-chemical and organoleptic features or its state of preservation. For example, this may included but is not limited to anti-oxidants, fragrance, colourings, preservatives, spices, etc...

A third feature of this invention refers to the procedure through which the oil is obtained (hereinafter procedure through which the oil is obtained in this invention) from the preserved frozen and/or vacuum-packed olive paste which comprises at least the following: a) emulsion or stirring of the paste and b) decanting or centrifuging the emulsion. Optionally, the oil thus obtained may be filtered.

In a preferred embodiment, the obtaining of olive oil through the paste of this invention may use the following treatments:
o Stirring of the paste

This procedure consists of stirring the paste in order to obtain a continuous oleous phase, which facilitates the separation of the oil from the rest of the oil components during the stage previous to the separation where the paste can be slightly heated in order to provoke a reduction of the oil viscosity and facilitate the formation of the oleous phase and its separation. However, the temperature should not be higher than 30°C during the stirring process in order to maximize the oxidation processes and the loss of volatile components by means of evaporation, thus making it possible to obtain quality oils.

The stirring time must be enough for the solid, aqueous and oleous phases to get grouped and obtain a uniform mass temperature. Excessive stirring is not recommended as this could provoke a reduction of the content of polyphone in the oil and the loss of fragrance. The stirring time is usually in the range of 10-60 minutes, preferably between 30-45 minutes.

This procedure may also take place through the addition of hot water, approximately 300 mL per Kg. of paste. In this case the procedure consists of stirring the paste for 10-30 minutes without adding water, trying to keep the temperature stable and later, boiling water is added and the stirring goes on for another 5-15 minutes.
o Centrifugation of the paste

The previous extraction of oil is achieved through centrifugation. At this stage, the solid phase (composed of skin, pulp and olive bones) separates from the liquid phase formed by the olive paste and which is collected in a decanter.
o Decanting of the oil

The liquid phase obtained during the centrifugation stage is separated into two phases: oil and aqueous phase (alpecin) through decanting. The decanting time must be enough to produce the separation of phases and be able to collect the oil from the upper part and bottle it. The usual decanting time is between 5-15 minutes.

In a preferred embodiment of the invention, a stage could be added between the stirring and the emulsion, which would consist of the pressing of the emulsion in order to separate the solid part from the liquid part.

In a preferred embodiment of the oil obtaining method of this invention, the paste might turn into an emulsion with any other kind of substance and/ or food, such as, without restriction, fruit, mushrooms, algae, in order to later press the emulsion, centrifuge it and decant it in order to obtain a different organoleptic feature oil depending on the user.

The preservation of preserved frozen and/or vacuum-packed olive paste as well as obtaining olive oil shall be easily performed at home and/ or in industrial environments by means of the proper equipment for the emulsion and/or stirring of the paste and the centrifugation, decanting and/or pressing thereof.

A fourth feature of this invention refers to the olive oil obtained from the preserved frozen and/ or vacuum-packed paste hereof.

Within the context of this invention, sourness is one of the chemical characteristics which defines oil quality. Thus, a high degree of sourness is abnormal in the oil produced by the breakage of the molecules of triglycerides through the glycoside links.

The degree of sourness of the oil represents the contents of free fat acids expressed as a percentage of the oleic acid.

Within the context of this invention, the peroxide index is a parameter of oil quality. It assesses the state of oxidation of the oil. During oil oxidation, the hyper oxides transfer to other substances and this index also indicates the damage that might have been suffered by certain components such as tocopherols (Vitamin E) and polyphenols. The peroxides result from the existent oxidation in a sample at a certain time and they are the first products of fat oxidation. This index measures the primary degree of oxidation of the oil, that is, the content of hyper oxides and it indicates the state of preservation thereof. The peroxide index detects oil oxidation before it is organoleptically detected, in spite of its variety and low representation in respect to the global state of oil together with the photometrical spectrum under UV light (K₂₃₂ and K₂₇₀), parameters that also indicate the state of oxidation of the oil, that is, from the beginning of oxidation until the time of racidity.

The median of the peroxide index is based on the determination of the quantity of peroxides that are present in the samples ("meq" of active O₂/kg of oil) that cause the oxidation of potassium iodide under working conditions.

Within the context of this invention, the UV test gives indications about the oil quality, its state of preservation and the changes induced by technological processes (such as refining.) The absorptions at these wavelengths are due to the fact that there are combined dienes and trienes at 270 nm. These absorption values are expressed in specific extinction, conventionally as K, called coefficient of extinction. This method provides a first impression about the olive oil freshness.

Within the context of this invention, the applicable limits to determine the oil quality are those shown in Regulation EEC No. 2568/91, modified by Regulation (EC) No. 1989/2003 that states a value of sourness lower than 0.8%, the peroxide index with a maximum of 20 mEq O₂/kg and 2.5 for the absorption at 270 and 232 nm, respectively, in extra virgin olive oils. For virgin olive oils, the maximum limit of sourness is 2% and the absorption at 270 is 0.25 and 2.6 for 232. The peroxide index is equal to 20 mEq O₂/kg.

Within the context of this invention and in relation to the sensory data shown in the examples (Tables IV and VI), the oil is classified under the denominations stated below, depending on the median defects and the median «fruited» attribute. The median defect is the median of the negative attributes detected with more intensity.

The value of the variation coefficient for this negative attribute must be equal to or lower than 20%.
a) *Extra virgin olive oil:* the median defect is equal to 0 and that corresponding to the «fruited» attribute is higher than 0.
b) *Virgin olive oil:* the median defect is higher than 0 and lower than or equal to 2.5 and that corresponding to the «fruited» attribute is higher than 0.
c) *Most pure olive oil:* the median defect is higher than 2.5 or lower than or equal to 2.5 and that corresponding to the «fruited» attribute is equal to 0.

Below are examples that illustrate this invention:

### Examples of embodiment of the invention

### Example 1:

In order to perform this invention, the feasibility of preserving olive and/or olive to obtain olive oil immediately before consumption was studied. In order to achieve this objective, the following experiment was planned for each olive variety:
- Whole olive preservation (refrigerated and frozen)
- Olive paste preservation (refrigerated and frozen.) In order to obtain the paste, the olives were washed and the leaves removed; they were then ground to obtain a homogeneous paste. Then, part of that paste was refrigerated at an approximate temperature of 5 C°, and another part of the paste was preserved frozen at an approximate temperature of - 18 C°.
- Follow-up with control of the oil obtained from the paste and the olives at the beginning, first and third month.
- Analytical control of the oil obtained through the peroxide index and that of dienes and trienes.

The oil was first prepared to control its evolution over time, preserving it at this ambient temperature, refrigerated and frozen.

### Example 2: Evolution of analytical and sensory parameters of the Arbequina

The activities performed up to the one-month control for this variety were:
- The acquisition of Arbequina olives at the Salomó Cooperative Association (Tarragona.)
- Obtaining of oil and olive paste for study. In order to do so, oil was initially prepared from the Arbequina olives, the said oil was preserved at ambient temperature in order to control its evolution as time went by and the whole olives and the paste were preserved (refrigerated and frozen)
- Analytical control of initial oil
- Obtaining of oil from the olives and paste preserved after a month of treatment and on the third month.
- Analytical control and taste of the obtained oils.

The first control of the oil at ambient temperature after its extraction was performed and the following values obtained:
- Peroxide Index = 5.8 meq/Kg (S=0.4 meq/Kg; RSD=6.7%) and
- Total sourness = 0.20 g oleic acid/100 g oil

The sensory analysis of this oil did not show any defects.

The second control of oil was performed one month after the first. Table I below shows the analytical results obtained:

**Table I**

| | **Parameter** | | | | |
|---|---|---|---|---|---|
| **Type of Treatment** | Total sourness (g oleic acid /100g) ***Max. 0.8** | Peroxide Index (meq 02/kg) **Max. 20** | Index K270 ***Max.0.22** | Diene Index µmol/g | Triene Index |
| Frozen preserved oil | *n.d.* | 5.1 | *n.d.* | 4.9 | 0.6 |
| Frozen preserved oil | *n.d.* | 5.6 | *n.d.* | 5.1 | 0.6 |
| Oil preserved at ambient temperature | 0.20 | 5.9 | 0.09 | 5.5 | 0.4 |
| Oil obtained from frozen preserved olives | 0.67 | 5.3 | 009 | 5.2 | 0.5 |
| Oil obtained from frozen preserved olives | 0.22 | 3.6 | 0.07 | 4.5 | 0.4 |
| Oil obtained from frozen preserved olive paste | 0.17 | 3.0 | 0.08 | 4.6 | 0.4 |

| | | | | | |
|---|---|---|---|---|---|
| The "Max" values stated in the Table correspond to the extra virgin olive oil. In the case of virgin olive oil these values are the following: maximum sourness 2.0, K270 maximum 0.25. n.d. non-determined | | | | | |

The third control was performed after three months of the first control. In Table II below there is a summary of the evolution of analytical parameters during the first three months for the Arbequina:

**Table II**

| **Parameter** | **ARBEQUINA Oil** | **Initial Control** | **Control 1 month** | **Control 3 months** |
|---|---|---|---|---|
| Total sourness (g oleic acid /100g) ***Max. 0.8** | Oil preserved at ambient temperature | 0.20 | 0.20 | 0.22 |
| | Oil obtained from preserved frozen olive paste | 0.20 | 0.17 | 0.22 |
| | Oil obtained from preserved frozen olives | **0.20** | **0.67** | **1.21** |
| | Oil obtained from preserved frozen olives | 0.20 | 0.22 | 0.23 |
| Peroxide Index (meq O₂/kg) ***Max. 20** | Oil preserved at ambient temperature | 5.8 | 5.9 | 6.4 |
| | Oil obtained from preserved frozen olive paste | 5,8 | 3.0 | 3.9 |
| | Oil obtained from preserved frozen olives | 5.8 | 5.3 | 3.1 |
| | Oil obtained from preserved frozen olives | 5.8 | 3.6 | 2.1 |
| Index K₂₇₀ ***Max.0.22** | Oil preserved at ambient temperature | *n.d* | 0.09 | 0.10 |
| | Oil obtained from preserved frozen olive paste | *n.d* | 0.08 | 0.07 |
| | from Oil obtained from preserved frozen olives | *n.d* | 0.09 | 0.10 |
| | Oil obtained from preserved frozen olives | *n.d* | 0.07 | 0.07 |

| | | | | |
|---|---|---|---|---|
| The "Max" values stated in the Table correspond to the extra virgin olive oil. In the case of virgin olive oil these values are the following: maximum sourness 2.0, K270 maximum 0.25. n.d. non-determined | | | | |

Later, and once the third control was performed, the hedonic tasting of the oils obtained through different treatments, i.e. from the frozen paste, the refrigerated olive and the frozen olive, was performed by an expert from the La Garriga (Lleida) area who remarked that the best oil was that obtained from the frozen paste and detected a defect called dead olive aroma in the oil obtained from the frozen olives. Tables III and IV show the results obtained from this tasting:

**Table III**

| **Type of Treatment** | **Description** |
|---|---|
| Oil preserved at ambient temperature | The worst compensated |
| Oil obtained from preserved frozen olives | Better colour, fair smell |
| Oil obtained from preserved frozen olives | Inadequate colour, good taste, no smell |
| Oil obtained from preserved frozen olive paste | Better compensated, taste, smell and colour |

**Table IV**

| **Variety** | **Arbequina** | | | | | | | | | |
|---|---|---|---|---|---|---|---|---|---|---|
| Control | Time 0 | | Time: one month of oil preserved at ambient temperature | | Time: one month, oil from frozen paste | | Time: 3 months of oil preserved at ambient temperature | | Time: 3 months oil from frozen paste | |
| Taste Reference | | | AANF+1 | | PCT1 | | AAFT3 | | APCT3 | |
| Positive Attributes | Intensity | DE | Intensity | DE | Intensity | DE | Intensity | DE | Intensity | DE |
| Fruited | nd | nd | 3.2 | 0.7 | 3.6 | 0.9 | 5.4 | 0.5 | 3.5 | 0.4 |
| Bitter | nd | nd | 1.5 | 1.2 | 2.3 | 1.0 | 2.9 | 1.0 | 1.8 | 0.6 |
| Spicy | nd | nd | 2.7 | 0.5 | 2.9 | 0.8 | 4.2 | 0.2 | 3.4 | 0.5 |
| Sweetness | nd | nd | 4.8 | 0.3 | 4.7 | 0.5 | 4.2 | 0.9 | 4.5 | 0.4 |
| Defects | Intensity | DE | Intensity | DE | Intensity | DE | Intensity | DE | Intensity | DE |
| Vinegar taste | nd | nd | 0.0 | 0.0 | 0.0 | 0.0 | 0.0 | 0.0 | 0.0 | 0.0 |
| Humidity | nd | nd | 0.0 | 0.0 | 0.0 | 0.0 | 0.0 | 0.0 | 0.0 | 0.0 |
| Sediment | nd | nd | 0.0 | 0.0 | 0.0 | 0.0 | 0.0 | 0.0 | 0.0 | 0.0 |
| Accumulated olive | nd | nd | 0.0 | 0.0 | 0.0 | 0.0 | 0.0 | 0.0 | 0.0 | 0.0 |
| Rancid | nd | nd | 0.0 | 0.0 | 0.0 | 0.0 | 0.0 | 0.0 | 0.0 | 0.0 |

### Example 3: Evolution and analytical and sensory parameters of Picual

The activities performed up to the control corresponding to the first month for this variety were:
- The acquisition of Picual olives.
- Obtaining of Picual preserved frozen oil and olive paste for preservation study.
- Analytical and sensory control of initial oil
- Analytical and sensory control of oils after the first month of control

The first control of Picual oil at ambient temperature after extraction was performed and the following values were obtained:
- Peroxide Index = 6.1 meq O₂/Kg oil (Maximum 20 meq O₂/Kg oil)
- Index K₂₇₀=0.08 (Maximum 0.22)
- Total sourness = 0.30 g oleic acid/100 g oil

The sensory analysis of this oil has not shown any defects.

The second control of this oil was performed one month after the first control and Table V below shows the analytical results obtained:

**Table V**

| | **Parameter** | | |
|---|---|---|---|
| **Type of Treatment** | Total sourness (g oleic acid/100g) ***Max. 0.8** | Peroxide Index (meq 02/kg) ***Max. 20** | Index K₂₇₀ ***Max.0.22** |
| Initial oil | 0.30 | 6.1 | 0.08 |
| Oil preserved at ambient temperature - 1 month | **0.36** | **6.5** | **0.09** |
| Oil obtained from preserved frozen olive paste - 1 month | **0.28** | **5.2** | **0.08** |

After the second control was performed, the hedonic tasting of the oils obtained using the different treatments was performed, the results of which are shown on Table VI below:

**Table VI**

| **Variety** | **Picual** | | | | | |
|---|---|---|---|---|---|---|
| Control | Time 0 | | Time: 1 month - oil preserved at ambient temperature | | Time : 1 month - oil from frozen paste | |
| Taste Reference | FILTERED PICUAL | | PAFT1 | | PPCT1 | |
| **Positive Attributes** | **Intensity** | **DE** | **Intensity** | **DE** | **Intensity** | **DE** |
| Fruited | 4.2 | 0.6 | 4.3 | 0.5 | 2.1 | 0.9 |
| Bitter | 3.0 | 0.4 | 2.1 | 1.7 | 2.0 | 0.0 |
| Spicy | 3.5 | 0.0 | 3.0 | 0.4 | 2.8 | 0.9 |
| Sweetness | 4.6 | 0.4 | 4.8 | 1.3 | 4.9 | 0.6 |

| **Defects** | **Intensity** | **DE** | **Intensity** | **DE** | **Intensity** | **DE** |
|---|---|---|---|---|---|---|
| Vinegar taste | 0.0 | 0.0 | 0.0 | 0.0 | 1.6 | 1.1 |
| Mould/ Humidity | 0.0 | 0.0 | 0.0 | 0.0 | 0.0 | 1.2 |
| Sediment | 0.0 | 0.0 | 0.0 | 0.0 | 0.0 | 0.0 |
| Accumulated olives | 0.0 | 0.0 | 0.0 | 0.0 | 1.5 | 1.5 |
| Rancid | 0.0 | 10.0 | 0.0 | 0.0 | 0.0 | 1.0 |

The results for Picual show a similar tendency to those already seen in example 2 for the Arbequina.

## Claims

1. Method for preserving olive oil that consists of freezing the paste obtained from the olive grinding.

2. Method according to claim 1 wherein the olive paste is also vacuum-packed.

3. Olive paste obtainable by the method for preserving olive oil of any of claims 1 or 2.

4. Procedure for obtaining oil from olive paste according to claim 2 which comprises:
a. Emulsifying or stirring the olive paste obtained according to claim 3
b. Oil extraction through centrifugation
c. Separation of the aqueous phase from the oleous phase through decanting.

5. Process for obtaining olive past according to claim 4 which also comprises the pressing of the product obtained in step a).

6. Olive oil obtainable by the process described in any of claim 4 or 5.
